(19) Europäisches Patentamt
European Patent Office
Office européen des brevets

(11) Publication number: 0 402 932 A1

(12) EUROPEAN PATENT APPLICATION

(21) Application number: 90111328.2

(22) Date of filing: 15.06.90

(51) Int. Cl.5: C09D 201/00, C08F 299/02, C08F 299/04, C08F 299/06, C08F 2/50

(30) Priority: 16.06.89 IT 2089789

(43) Date of publication of application: 19.12.90 Bulletin 90/51

(84) Designated Contracting States: AT BE CH DE DK ES FR GB GR IT LI LU NL SE

(71) Applicant: OECE Industrie Chimiche Spa
via Volturno 96
I-41032 Cavezzo (Modena)(IT)

(72) Inventor: Vernizzi, Giorgio
Via Carbonieri 47
I-41100 Modena(IT)
Inventor: Raffellini, Peppino
Via della Libertà 20
I-41032 Cavezzo(IT)
Inventor: Trevisan, Lucio
Via Galimberti 9
I-43100 Parma(IT)

(74) Representative: Gervasi, Gemma et al
NOTARBARTOLO & GERVASI Srl Viale
Bianca Maria 33
I-20122 Milan(IT)

# (54) Photopolymerizable coating products.

(57) The invention relates to both highly pigmented and transparent coating products which can be polymerized photochemically by irradiation with emission in the near ultraviolet and in the visible, possibly followed by additional irradiation in she infrared and/or in the ultraviolet, and consist of homogeneous dispersions of ethylenically unsaturated polymer substances, and photocatalysts based on compounds of metals of group IV A and of groups I B to VII B and VIII of the periodic table, preferably in the presence of photoinitiators chosen from derivatives of thioxanthone, acetophenone, benzophenone, benzoin, ketoxime and acylphosphine oxide, and either containing or not containing pigments and/or fillers.

EP 0 402 932 A1

Xerox Copy Centre

# PHOTOPOLYMERIZABLE COATING PRODUCTS

## State of the art

Photopolymerizable coating products are already widely known and used in various industrial sectors because of the considerable advantage which this system offers in terms of energy saving, ecological content, working safety and high productivity.

The absence or near absence of components which vaporize during the (applicational) polymerization stage is the special characteristic of these systems, which enable industrial coating cycles to be used in which emissions are so low as to totally satisfy even the most severe national and foreign antipollution laws.

Moreover the energy consumption of this process is considerably less than that of other drying methods based on the application of heat such as hot air, infrared rays etc.

As this system results in very fast reaction processes leading to highly cross-linked products, high-productivity industrial cycles can be implemented enabling protection coatings to be obtained which are of optimum performance in terms of physico-chemical resistance and mechanical strength.

For these reasons, photochemical cross-linking is of considerable interest in the painting of furniture and of all those manufactured articles (such as of wood, plastics etc.) which cannot be subjected to high drying temperature.

Photochemical processes have been widely studied during the last decade and abundant literature exists in this respect. To this end, various families of substances, known as "photoinitiators", have been conceived which under the effect of radiation decompose to trigger the radical polymerization reaction.

There has as yet however been no solution to the problem of the complete cross-linking, using only photochemical means, of totally concealing pigmented coating products applied in thicknesses exceeding 80-100 microns.

In this respect, when high pigment concentrations (such as titanium dioxide, carbon black etc.) are present, sufficient polymerization within the film has as yet not been obtained, because of the screening effect produced by these pigments, which absorb within the same absorption bands as the photoinitiator. This therefore prevents photochemical activation and consequent polymerization of the coating.

The problem is further complicated in the case of coatings applied in large thicknesses (and this also applies to transparent coatings) in that the formation of a thin surface layer of polymer prevents deep penetration of the radiation and consequently the total polymerization of the coating layer, and in addition prejudices its adhesion to the support.

An attempt has been made to solve the problem by using large photoinitiator quantities, however this is not effective and results in marked yellowing of the coating, which particularly in the case of white pigments is unacceptable.

The only ways in which high-concealing photopolymerizable products can be currently used is by associating them with the use of:

a) radiation systems based on electron beams

b) mixed U.V.- redox systems.

The first case represents a very effective system giving very high production rates, but requires extremely high plant investment which, combined with the risks involved in the use of ionizing radiation, means that it cannot be widely used in the furniture and furnishing industry.

The mixed U.V.- redox system, which requires the simultaneous use of photoinitiators and an oxidation-reduction pair in the form of organic peroxides and metal salts (transition metals), involves a whole series of drawbacks, including: the development of undesirable colour effects, an application time for the coating product which is too short, and the need for a good supply of heat during what in effect is a substantially longer drying time. These drawbacks have in practice prevented its development at the industrial level, and the system is being progressively abandoned.

## Description of the invention

According to the present invention it has been found possible to polymerize both highly pigmented and transparent coatings, even if applied in considerable thickness, by using a photochemical process activated in spectral zones in which both the polymers and any pigments present are traversed completely by the actinic radiation.

As such zones are in the near ultraviolet with a wavelength exceeding 350 nm, in the visible and in the near infrared, it was necessary to introduce a photocatalytic system able to develop its maximum efficiency in said emission bands.

The developed process uses special photocatalysts which on absorbing in the near U.V., the visible and the near I.R. in which the screening effect of pigments and polymers is a minimum, decompose to trigger the radical polymerization

reaction in the various constituent unsaturated monomers and prepolymers of the coating.

In this manner high-solid coating products are possible which in addition to the advantage of minimum emission of volatile organic substances into the environment, cross-link by irradiation with lamps which emit within the U.V. at wavelengths exceeding 350 nm and in the visible and can be applied in considerable thicknesses, and in addition also contain a higher quantity of pigment to allow improved concealment and glossiness together with long life and excellent adhesion to the support, to thus allow both pigmented and transparent coatings to be prepared having high performance and aesthetic characteristics in line with best Italian design much appreciated on a world level.

In this respect it should be noted that radiation emitted within the aforesaid spectral zones is much less dangerous than that emitted in the ultraviolet alone, both because of its effect on the human skin and conjunctiva and from the ecological aspect in the broadest sense, in that radiation sources active in these emission bands do not have the side effect of ozone formation, a substance which is dangerous both in itself and in particular because of the highly harmful products resulting from it (such as styrene oxide, hydroxyacrylates etc.).

The coating products of the invention are particularly suitable for coating those manufactured articles, such as of wood or plastics, which cannot be subjected to high drying temperature.

Although the photocatalysts of the invention are able alone to perform the radical polymerization of the coating product, it has been found preferable to use them in combination with already known photoinitiators active in the ultraviolet, both to minimize undesirable chromatic effects deriving from high percentage use of said photocatalysts, and to better utilize the considerable synergic effect deriving from the simultaneous use of these two classes of product.

Possible short irradiation with high-power I.R. and/or U.V. lamps further accelerates the polymerization process, to allow the high productivity required by the major industries in this field to be attained.

The coating system therefore consists of a homogeneous dispersion of:

a) resins with ethylenically unsaturated groups and/or prepolymers with the same type of unsaturations, possibly in the presence of monomers of acrylic, vinyl or allyl type

b) one or more photocatalysts

c) preferably, but not necessarily, one or more photoinitiators

d) pigments and/or fillers for pigmented systems.

The unsaturated resins used are generally styrenated unsaturated polyesters, which are easily available commercially such as the well known Roskydal (type 300, 500A, 502, 850W) of Bayer, or Waloran (type 2101, 6002) of Wolff-Walsrode.

The unsaturated prepolymers used are also commercially available products such as the Ebecryl epoxyacrylic prepolymers of U.C.B. (type 604, 1604, 1608), the Ebecryl urethaneacrylic prepolymers (type 210, 270) or the Ebecryl polyesteracrylated prepolymers (type 810, 850, 1810).

Non-limiting examples of unsaturated monomers which can be used in association with the resins and/or prepolymers are: ethylacrylate, 1,6-hexanedioldiacrylate, diethyleneglycoldiacrylate, tripropyleneglycoldiacrylate, bisphenoldiacrylate, diethyleneglycolbisallylethercarbonate, trimethylolpropanetriacrylate, styrene, vinylacrylate, vinylpyrrolidone, trimethylpropanediallylether, and vinylcarbazole.

The pigments can be any of those usually used such as titanium dioxide, carbon black, coloured pigments (such as the red R O 3750 BASF, the blue BLU 2GLSP SANDOZ, or the green VERDE 3GLSL SANDOZ). The fillers can also be those usually used such as kaolin and talc.

Both the pigments and fillers are preferably dispersed in the resin and/or in the prepolymer and/or in the monomer.

The photocatalysts according to the invention are compounds of metals of group IVA and of metals of groups IB to VIIB and VIII (transition elements) of the periodic table, and chosen from inorganic acid salts, organic acid salts, alkoxy, phenoxy, thioderivatives and azoderivatives, which can be bonded to organic substances of acid, basic or neutral nature, to give stable complexes.

These photocatalysts are preferably soluble in the polymerization system or in a solvent which can be introduced into the polymerization system.

Non-limiting examples of inorganic acid salts are sulphates, halides and nitrates; examples of organic acid salts are acetates, propionates, acrylates, octanoates, oxalates and naphthenates; examples of alkoxy are ethoxy, propoxy, isopropoxy, butoxy, tert-butoxy and pentoxy.

Lead, zinc, cobalt, manganese, zirconium, vanadium. cerium and europium compounds have proved particularly suitable.

The following compounds have proved particularly active: triethoxyvanadate, tripropoxyvanadate, triisopropoxyvanadate, tributoxyvanadate, tert-butoxyvanadate, tripentoxyvanadate, cobalt salts such as trioxalate, triacetate, trioctanoate possibly complexed for example with acetylacetone, nitrate possibly complexed for example with $NH_3$ or amines, and mixed salts such as cobalt and potassium trioxalate; zirconium propylate, butylate, diacrylate and octanoate; lead octanoate; manganese octanoate; zinc diacrylate, octanoate and acetylacetonate; cerium and ammonium nitrate; europium pentanedionate, trichloride and triacetate.

The photoinitiators according to the invention are chosen from derivatives of thioxanthone, acetophenone, benzophenone, benzoin, ketoxime and acylphosphine oxide, characterised by the presence of the group:

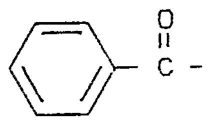

which can be substituted.

In particular, the photoinitiators are chosen from:

1) thioxanthone derivatives of formula:

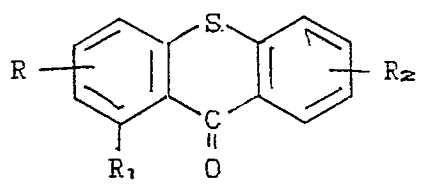

where R, $R_1$ and $R_2$ can be hydrogen, halogens, or alkyl, alkenyl or alkynyl groups;

2) acetophenone derivatives of formula:

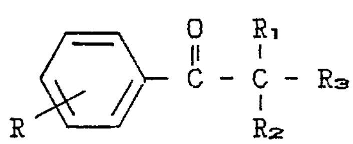

where R, $R_1$, $R_2$ and $R_3$ can be hydrogen, halogens, or alkyl, hydroxy, alkoxy, amino or heterocyclic groups;

3) benzophenone derivatives of formula:

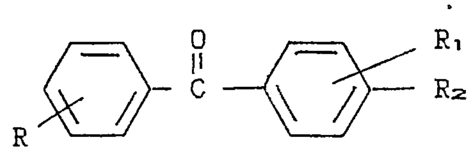

where R, $R_1$ and $R_2$ can be hydrogen, or alkyl, alkenyl, alkynyl or alkoxy groups;

4) benzoin derivatives of formula:

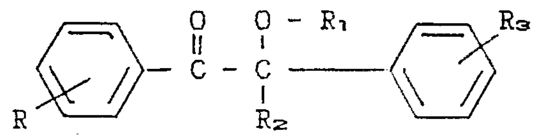

where $R_2$ can be hydrogen or $OR_4$, and R, $R_1$, $R_3$ and $R_4$ can be hydrogen, or alkyl, alkenyl, alkynyl or aryl groups;

5) ketoxime derivatives of formula:

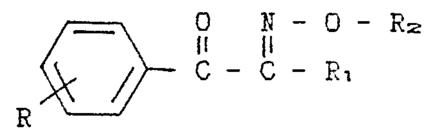

where R, $R_1$ and $R_2$ can be hydrogen, halogens, or alkyl or sulphonyl groups;

6) acylphosphine oxide derivatives of formula:

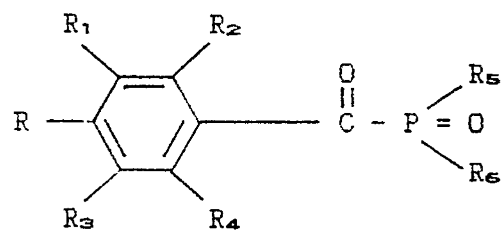

where R, $R_1$, $R_2$, $R_3$, $R_4$, $R_5$ and $R_6$ can be hydrogen, halogens, or alkyl, acrylic, cyclohexyl, alkoxy or heterocyclic groups containing sulphur, nitrogen or oxygen atoms.

The photocatalysts are used in quantities of between 0.01% and 1% w/w of the unsaturated compounds to be polymerized.

The photoinitiators are used in quantities of between 0.5% and 5% w/w of the unsaturated compounds to be polymerized.

The photocatalyst:photoinitiator ratio is preferably between 0.05 and 0.2 w/w.

The coating system is applied to the support by usual methods such as curtain coating, roller or spray.

The drying time varies according to the application cycle. After its application to the support, the system is always subjected to an irradiation cycle with a lamp which emits in the near U.V. and in the visible (> 350 nm); this cycle can be preceded or followed by treatment with air at ambient temperature or with hot air (40-50° C).

Irradiation with infrared rays can follow. Finally, the drying cycle can be completed by irradiation with a lamp which emits only in the U.V. (< 350 nm).

The choice of drying cycle is in any event within the competence of the average expert.

With the process of the invention films are obtained which are glossy, concealing, well polymerized and hard, both on the surface and at depth.

The purpose of the examples given hereinafter is to illustrate the invention, but without any limitative intent.

EXAMPLE 1

A white topcoat product, of mixed polyester-acrylic base, applied by curtain coater.

400 g of Ebecryl 604 (U.C.B.) epoxyacrylic prepolymer and 250 g of rutile titanium dioxide predispersed in part of the same prepolymer are mixed with 200 g of Roskydal 500A (Bayer) unsaturated styrenated polyester resin and 150 g of 1,6-hexanedioldiacrylate.

1 g of tert-butoxyvanadate, 1 g of zirconium octanoate, 10 g of 2,4,6-trimethylbenzoyldiphenylphosphine oxide and 10 g of 1,2-diphenyl-2,2-dimethoxyethanone dissolved in ethylacetate are then added.

The mixture is stirred until a complete and homogeneous dispersion is formed, and the viscosity is adjusted to 30-35 sec. (Ford 4 cup, by ASTM D-1200-82) diluting with 1,6-hexanediolacrylate if necessary.

It is applied by curtain coater in a quantity of about 110 g/m$_2$ and subjected to the following drying cycle:

- 2 minutes at 40-45 °C with hot air circulation;
- 3 minutes of U.V.- visible irradiation with low pressure lamps (120-140 W lamps);
- 20 seconds of I.R. irradiation;
- 10 seconds of U.V. irradiation with four lamps at 80-120 W/cm at a speed of 12 m/min.

In this manner a glossy film is obtained which is concealing, well polymerized and hard both on the surface and at depth.

EXAMPLE 2

A white topcoat product, of mixed polyester-acrylic base, applied by spray.

350 g of Ebecryl 270 (U.C.B.) urethaneacrylic prepolymer and 250 g of rutile titanium dioxide predispersed in part of the same prepolymer are mixed with 200 g of Roskydal 500A (Bayer) unsaturated styrenated polyester resin and 200 g of 1,6-hexanedioldiacrylate.

1 g of tert-butoxyvanadate, 1 g of zirconium octanoate, 0.5 g of lead octanoate, 10 g of 2,4,6-trimethylbenzoyldiphenylphosphine oxide and 10 g of 1,2-diphenyl-2,2-dimethoxyethanone dissolved in ethylacetate are then added.

The mixture is stirred until a complete and homogeneous dispersion is formed, and the viscosity is adjusted to 20-25 sec. (Ford 4 cup) by adding ethylacetate if necessary.

After spray application in a quantity of about 140 g/m$_2$ the coated manufactured articles are subjected to the following drying cycle:

- 5 minutes at ambient temperature with air circulation;
- 2 minutes of U.V.- visible irradiation with low pressure lamps;
- 5 minutes at 40-45 °C with hot air circulation;
- 15 seconds of final U.V. irradiation with high-power lamps at 80-120 W/cm.

A film is obtained as in Example 1.

EXAMPLE 3

A white topcoat product, of mixed polyester-acrylic base, applied by curtain coater.

250 g of Ebecryl 810 polyester-acrylic prepolymer and 250 g of titanium dioxide predispersed in the same prepolymer are mixed with 100 g of Ebecryl 270 urethaneacrylic prepolymer, 200 g of Roskydal 500A unsaturated styrenated polyester resin and 200 g of 1,6-hexanedioldiacrylate.

1 g of triisopropoxyvanadate, 1 g of zirconium octanoate and 20 g of 2,4,6-trimethylbenzoyldiphenylphosphine oxide dissolved in ethylacetate are then added.

The mixture is stirred until a complete and homogeneous dispersion is formed, and the viscosity is adjusted to 30-35 sec. (Ford 4 cup) by adding 1,6-hexanediolacrylate if necessary.

After application by curtain coater in a quantity of about 120 g/m$_2$ it is subjected to the following drying cycle:

- 2 minutes at 40-45 °C with hot air circulation;
- 3 minutes of U.V.- visible irradiation with low pressure lamps;
- 15 seconds of I.R. irradiation;
- 15 seconds of final U.V. irradiation with high-power lamps (80-120 W/cm).

A film is obtained as in Example 1.

EXAMPLE 4

A white topcoat product, of mixed polyester-acrylic base, applied by curtain coater.

250 g of Ebecryl 830 polyester acrylate prepolymer and 250 g of rutile titanium dioxide predispersed in the same prepolymer are mixed with 100 g of Ebecryl 1608 epoxyacrylic prepolymer, 200 g of Roskydal 300 unsaturated polyester resin and 200 g of tripropyleneglycoldiacrylate.

1 g of triethoxyvanadate, 1 g of zirconium propylate, 15 g of 2-hydroxy-2-methylphenylpropanone and 10 g of 2,4,6-trimethylbenzoyl-diphenylphosphine oxide dissolved in ethylacetate are then added.

The mixture is stirred until a complete and homogeneous dispersion is formed, and the viscosity is adjusted to 30-35 sec. (Ford 4 cup) by adding 1,6-hexanediolacrylate if necessary.

After application by curtain coater in a quantity of about 110 g/m$_2$ it is subjected to the following drying cycle:

- 1 minute at 40-45°C with hot air circulation;
- 4 minutes of U.V.- visible irradiation with low pressure lamps (120-140 W);
- 20 seconds of I.R. irradiation;
- 15 seconds of final U.V. irradiation with high-pressure lamps at 80-120 W/cm).

A polymer film is obtained as in Example 1.

## EXAMPLE 5

A white topcoat product, of mixed polyester-acrylic base, applied by spray.

400 g of Roskydal 502 unsaturated polyester resin and 250 g of titanium dioxide predispersed in part of the same prepolymer are mixed with 250 g of Ebecryl 1608 epoxyacrylic prepolymer and 100 g of Ebecryl OTA 480 acrylic oligomer.

2 g of tritert-butoxyvanadate, 17 g of 1-hydroxycyclohexylphenylketone and 8 g of 2,4,6-trimethylbenzoyldiphenylphosphine oxide dissolved in ethylacetate are then added.

The mixture is stirred until a complete and homogeneous dispersion is formed, and the viscosity is adjusted to 20-25 sec. (Ford 4 cup) by adding ethylacetate.

After spray application in a quantity of 130-140 g/m$_2$ the coating is subjected to the following drying cycle:

- 5 minutes at ambient temperature with air circulation;
- 2 minutes of U.V.- visible irradiation with low pressure lamps;
- 2 minutes at 40-45°C with hot air circulation;
- 20 seconds of final U.V. irradiation with high-power lamps (80-120 W/cm).

In this manner a polymeric film is obtained as in Example 1.

## EXAMPLE 6

A white primer and/or topcoat product, of acrylic base, applied by roller.

400 g of Ebecryl 1608 epoxyacrylic prepolymer and 200 g of rutile titanium dioxide predispersed in part of the same prepolymer are mixed with 100 g of talc predispersed in 200 g of 1,6-hexanediacrylate.

3 g of potassium cobalt trioxalate, 1 g of cerium ammonium nitrate (tetravalent). 10 g of 1,2-diphenyl-2,2-ethoxyethanone and 10 g of 2-methylhydroxy-2-methylphenylpropanone dissolved in ethanol are then added.

The mixture is stirred until a complete and homogeneous dispersion is formed; after roller application in a quantity of 20 g/m$_2$ the coating is irradiated with high pressure U.V.- visible lamps (lamps 80-120 W/cm) at a rate of 12 m/minute corresponding to an irradiation time of about 6 seconds.

In this manner a hard polymerized film adherent to the support is obtained.

## EXAMPLE 7

A white primer and/or topcoat product, of acrylic base, applied by roller.

600 g of Ebecryl 210 urethaneacrylic prepolymer and 200 g of titanium dioxide predispersed in part of the same prepolymer are mixed with 100 g of kaolin predispersed in 100 g of tripropyleneglycoldiacrylate.

1 g of trivalent cobalt octanoate complexed with acetylacetone, 1 g of zinc octanoate, 1 g of lead octanoate, 15 g of hydroxycyclohexylphenylketone and 10 g of 2,4,6-trimethylbenzoyldiphenyl-phosphine oxide dissolved in a mixture of isopropanol and ethyl acetate are then added.

The mixture is stirred until a complete and homogeneous dispersion is formed, and after roller application in a quantity of 30 g/m$_2$ the coating is irradiated with 4 high pressure U.V.- visible lamps (lamps 80-120 W/cm) at a rate of 8 m/minute corresponding to an irradiation time of about 15 seconds.

In this manner a film is obtained as in Example

6.

EXAMPLE 8

A white primer and/or topcoat product, of acrylic base, applied by roller.

500 g of Ebecryl 810 polyester acrylic prepolymer and 200 g of titanium dioxide predispersed in part of the same prepolymer are mixed with 100 g of talc predispersed in 200 g of Ebecryl OTA 480 acrylic oligomer.

1 g of zirconium octanoate and 15 g of 2,4,6-trimethylbenzoyldiphenyl-phosphine oxide dissolved in ethylacetate are then added.

The mixture is stirred until a complete and homogeneous dispersion is formed, and after roller application in a quantity of 25 $g/m_2$ the coating is irradiated with 4 high pressure U.V.- visible lamps of 80-120 W/cm at a rate of 8 m/minute corresponding to an irradiation time of about 15 seconds.

In this manner a film is obtained as in Example 6.

EXAMPLE 9

A white primer and/or topcoat product, of acrylic base, applied by roller.

500 g of Ebecryl 1810 epoxyacrylic prepolymer and 250 g of titanium dioxide predispersed in part of the same prepolymer are mixed with 50 g of talc and 50 g of kaolin predispersed in 150 g of N-vinylpyrrolidone monomer.

2 g of trivalent cobalt octanoate complexed with 2,4-pentadione, 1 g of zinc octanoate, 2 g of europium (trivalent) pentanedionate, 15 g of 1,2-diphenyl-2,2-dimethoxyethanone and 10 g of 2,4,6-trimethylbenzoyldiphenyl-phosphine oxide dissolved in ethanol are then added.

The mixture is stirred until a complete and homogeneous dispersion is formed, and after roller application in a quantity of 20 $g/m_2$ the coating is irradiated for about 10 seconds with high power U.V.- visible lamps (80-120 W/cm).

In this manner a film is obtained as in Example 6.

EXAMPLE 10

A primer and/or topcoat product, of acrylic base, applied by roller.

600 g of Ebecryl 210 urethaneacrylic prepolymer and 250 g of rutile titanium dioxide predispersed in part of the same prepolymer are mixed with 100 g of N-vinylpyrrolidone and 50 g of diethyleneglycol bisallylethercarbonate.

1 g of tert-butoxyvanadate, 1 g of zirconium octanoate, 0.2 g of zinc octanoate, 1 g of lead octanoate, 10 g of hydroxycyclohexylphenylketone and 15 g of 2,4,6-trimethylbenzoyldiphenyl-phosphine oxide dissolved in ethylacetate are then added.

The mixture is stirred until a complete and homogeneous dispersion is formed, and after roller application in a quantity of about 20 $g/m_2$ the coating is irradiated with 4 high power U.V.- visible lamps (80-120 W/cm) at a rate of 6 m/minute corresponding to an irradiation time of about 20 seconds.

In this manner a film is obtained as in Example 6.

EXAMPLE 11

A white primer product, of polyester base, applied by roller.

650 g of Roskydal 502 unsaturated polyester resin, 100 g of titanium dioxide, 100 g of talc and 100 g of calcium carbonate all predispersed in part of the same resin are mixed with 50 g of styrene.

3 g of trivalent cobalt octanoate complexed with acetylacetone and 20 g of 1,2-diphenyl-2,2-dimethoxyethanone dissolved in ethyl acetate are then added.

The mixture is stirred until a complete and homogeneous dispersion is formed, and after roller application in a quantity of 30 $g/m_2$ the coating is irradiated with 4 U.V.- visible lamps of 80-120 W/cm at a rate of 8 m/minute corresponding to an irradiation time of about 15 seconds.

A well polymerized film is obtained which is hard both on its surface and at depth, adheres properly to the support and can be easily sandpapered.

EXAMPLE 12

A white primer product, of polyester base, applied by roller.

700 g of Roskydal 300 unsaturated styrenated

polyester resin, 150 g of titanium dioxide and 100 g of kaolin predispersed in part of the same resin are mixed with 50 g of N-vinylpyrrolidone monomer.

1 g of triethoxyvanadate, 1 g of zirconium octanoate and 25 g of 2,2-hydroxy-2-methylphenylpropane dissolved in ethyl acetate are then added.

The mixture is stirred until a complete and homogeneous dispersion is formed, and after roller application in a quantity of 30 g/$m_2$ the coating is irradiated with 4 high power (120 W/cm) U.V.-visible lamps at a rate of 8 m/minute corresponding to an irradiation time of about 15 seconds.

A polymer film is obtained as in Example 11.

EXAMPLE 13

A white primer product, of mixed polyester-acrylic base, applied by spray.

350 g of Ebecryl 210 urethaneacrylic prepolymer, 150 g of rutile titanium dioxide and 150 g of kaolin predispersed in part of the same prepolymer are mixed with 150 g of Roskydal 300 unsaturated polyester resin and 200 g of N-vinylpyrrolidone monomer.

2 g of tripentoxyvanadate and 25 g of 2,4,6-trimethylbenzoyldiphenylphosphine oxide dissolved in ethylacetate are then added.

The mixture is stirred until a complete and homogeneous dispersion is formed, and the viscosity is adjusted to 20-25 sec. (Ford 4 cup) by adding ethylacetate if necessary.

After spray application in a quantity of about 140 g/$m_2$ the coating is subjected to the following drying cycle:
- 5 minutes at 20-25° C with air circulation;
- 2 minutes of U.V.- visible irradiation with low pressure lamps;
- 2 minutes at 40-45° C with hot air circulation;
- 15 seconds of final U.V. irradiation with high-power lamps of 80-120 W/cm.

A well polymerized large-thickness film is obtained which adheres properly to the support and can be easily sandpapered.

EXAMPLE 14

A white primer product, of mixed polyester-acrylic base, applied by curtain coater.

300 g of Ebecryl 810 polyester acrylate prepolymer, 150 g of titanium dioxide and 150 g of kaolin predispersed in part of the same prepolymer, are mixed with 200 g of Roskydal 500A unsaturated polyester resin and 200 g of tripropyleneglycoldiacrylate.

1 g of triethoxyvanadate, 1 g of zirconium butylate, 0.5 g of lead octanoate, 10 g of 1,2-diphenyl-2,2-dimethoxyethanone and 15 g of 2,4,6-trimethylbenzoyl-diphenylphosphine oxide are then added.

The mixture is stirred until a complete and homogeneous dispersion is formed, and the viscosity is adjusted to 30-35 sec. (Ford 4 cup) by adding 1,6-hexanedioldiacrylate.

After application by curtain coater in a quantity of 110 g/$m_2$ the coating is subjected to the following drying cycle:
- 2 minutes at 40-45° C with hot air circulation;
- 3 minutes of U.V.- visible irradiation with low pressure lamps;
- 15 seconds of I.R. radiation;
- 10 seconds of final U.V. irradiation with high-power lamps of 100 W/cm.

A film is obtained as in Example 13.

EXAMPLE 15

A white primer product, of mixed polyester-acrylic base, applied by spray.

400 g of Roskydal 300 unsaturated polyester resin, 100 g of rutile titanium dioxide and 200 g of kaolin predispersed in the said resin, are mixed with 150 g of Ebecryl 604 epoxyacrylic prepolymer, 100 g of N-vinylpyrrolidone and 50 g of vinylcarbazole monomer.

3 g of potassium cobalt trioxalate, 1.0 g of zirconium propylate, 15 g of hydroxycyclohexylketone and 10 g of 2,4,6-trimethylbenzoyldiphenyl-phosphine oxide dissolved in isopropanol are then added.

The mixture is stirred until a complete and homogeneous dispersion is formed, and the viscosity is adjusted to 25 sec. (Ford 4 cup) by adding ethylacetate.

After spray application in a quantity of about 140 g/$m_2$ the coating is subjected to the following drying cycle:
- 5 minutes at ambient temperature with air circulation;
- 2 minutes of U.V.- visible irradiation with low pressure lamps;
- 2 minutes at 40-45° C with hot air circulation;
- 15 seconds of final U.V. irradiation with high-pressure lamps.

A well polymerized large-thickness film is obtained which adheres properly to the support and can be easily sandpapered.

EXAMPLE 16

A black topcoat product, of mixed polyester-acrylic base, applied by curtain coater.

390 g of Roskydal 500A unsaturated polyester resin and 10 g of carbon black predispersed in part of said resin, are mixed with 400 g of Ebecryl 604 epoxyacrylic prepolymer and 200 g of 1,6-hexanedioldiacrylate.

3 g of trivalent cobalt octanoate complexed with acetylacetone, 1.0 g of manganese octanoate, 10 g of 1,2-diphenyl-2,2-dimethoxyethanone and 10 g of chlorothioxanthone dissolved in isopropanolethylacetate are then added.

The mixture is stirred until a complete and homogeneous dispersion is formed, and the viscosity is adjusted to 30-35 sec. (Ford 4 cup) by adding 1,6-hexanedioldiacrylate if necessary.

After application by curtain coater in a quantity of about 110 $g/m_2$ the coating is subjected to the following drying cycle:
- 2 minutes at 40-45 °C with hot air circulation;
- 5 minutes of U.V.- visible irradiation with low pressure lamps;
- 15 seconds of I.R. irradiation;
- 15 seconds of final U.V. irradiation with high-power lamps of 100 W/cm.

A well cross-linked film is obtained which is concealing and glossy.

EXAMPLE 17

A black topcoat product, of mixed polyester-acrylic base, applied by brush.

390 g of Roskydal 500A unsaturated polyester resin and 10 g of carbon black predispersed in part of the same resin are mixed with 450 g of Ebecryl 810 polyester acrylic prepolymer and 150 g of N-vinylpyrrolidone monomer.

1 g of triethoxyvanadate, 1 g of zirconium propylate, 10 g of 2,4,6-trimethylbenzoyldiphenylphosphine oxide and 10 g of 1,2-diphenyl-2,2-dimethoxyethanone dissolved in ethylacetate are then added.

The mixture is stirred until a complete and homogeneous dispersion is formed, and the viscosity is adjusted to 30-35 sec. (Ford 4 cup) by adding N-vinylpyrrolidone monomer.

After brush application in a quantity of about 120 $g/m_2$ the coating is subjected to the following drying cycle:
- 2 minutes at 40-45 °C with hot air circulation;
- 3 minutes of U.V.- visible irradiation with low pressure lamps;
- 20 seconds of I.R. irradiation;
- 15 seconds of final U.V. irradiation with high-power lamps of 100 W/cm.

A properly cross-linked film is obtained which is concealing and glossy.

EXAMPLE 18

A black topcoat product, of mixed polyester-acrylic base, applied by spray.

340 g of Roskydal 502 unsaturated polyester resin and 10 g of carbon black predispersed in part of the same resin are mixed with 350 g of Ebecryl 270 urethaneacrylic prepolymer, 100 g of tripropyleneglycoldiacrylate, 100 g of N-vinylpyrrolidone monomer and 100 g of trimethylolpropanediallylether.

2 g of tributoxyvanadate and 1 g of trivalent cobalt acetate complexed with acetylacetone, dissolved in tetrahydrofuran, are added.

The mixture is stirred until a complete and homogeneous dispersion is formed, and the viscosity is adjusted to 20-25 sec. (Ford 4 cup) by adding ethylacetate under stirring.

After spray application in a quantity of about 130 $g/m_2$ the coating is subjected to the following drying cycle:
- 5 minutes at ambient temperature with air circulation;
- 3 minutes of U.V.- visible irradiation with low pressure lamps (120-140 W);
- 5 minutes at 40-45 °C with hot air circulation;
- 15 seconds of final U.V. irradiation with high-power lamps (80-120 W/cm).

A properly cross-linked film is obtained which adheres to the support.

EXAMPLE 19

A black topcoat product, of acrylic base, applied by roller.

835 g of Ebecryl 810 polyester acrylic prepolymer and 15 g of carbon black predispersed in part of the same prepolymer, are mixed with 100 g of trimethylolpropanediallylether and 50 g of 1,6-hexanedioldiacrylate.

5 g of trivalent cobalt acetate complexed with acetylacetone, 10 g of 2,4,6-trimethylbenzoyldiphenylphosphine oxide and 20 g of 2-butoxy-1,2-diphenylethanone dissolved in ethylacetate are added.

The mixture is stirred until a complete and homogeneous dispersion is formed, and after roller application in a quantity of 20 g/$m_2$ the coating is irradiated for 15 seconds with high-power U.V.-visible lamps of 100 W/cm.

A properly hardened film is obtained which adheres to the support.

EXAMPLE 20

A black topcoat product, of acrylic base, applied by brush.

640 g of Ebecryl 210 urethaneacrylic prepolymer and 10 g of carbon black predispersed in part of the same prepolymer are mixed with 250 g of N-vinylpyrrolidone monomer and 100 g of 1,6-hexanediolacrylate.

2 g of tert-butoxyvanadate, 2 g of trivalent cobalt octanoate complexed with acetylacetone, 15 g of 1,2-diphenyl-2,2-dimethoxyethanone and 10 g of 2-chlorothioxanthone dissolved in tetra hydrofuran are then added.

The mixture is stirred until a complete and homogeneous dispersion is formed, and the viscosity is adjusted to 30-35 sec. (Ford 4 cup) by adding 1,6-hexanedioldiacrylate if necessary.

After brush application in a quantity of about 110 g/$m_2$ the coating is subjected to the following drying cycle:
- 3 minutes at 40-45° C with hot air circulation;
- 3 minutes of U.V.- visible irradiation with low pressure lamps;
- 15 seconds of I.R. irradiation;
- 10 seconds of final U.V. irradiation with high-power lamps of 100 W/cm.

A film is obtained as in Example 16.

EXAMPLE 21

A white primer product, of polyester base in aqueous dispersion, applied by spray.

800 g of Roskydal 850W unsaturated polyester resin in the form of a 50% dispersion in water are mixed with 100 g of titanium dioxide and 50 g of calcium carbonate, predispersed in part of the same resin.

3 g of europium triacetate and 20 g of phenyl-2-hydroxymethylpropanone are then added under strong stirring.

The mixture is stirred until a complete and homogeneous dispersion is formed, and the viscosity is adjusted to 20-25 sec. (Ford 4 cup) by adding water if necessary.

After spray application in a quantity of about 160 g/$m_2$ the coating is subjected to the following drying cycle:
- 10 minutes at 50° C with hot air circulation;
- 2 minutes of U.V.- visible irradiation with low pressure lamps;
- 15 seconds of I.R. irradiation;
- 15 seconds of final U.V. irradiation with high-pressure lamps.

A polymer film is obtained which is hard on its surface and at depth and can be easily sandpapered.

EXAMPLE 22

A white primer product, of polyester base in aqueous dispersion, applied by brush.

900 g of Waloran 2101 unsaturated polyester resin in the form of a 50% dispersion in water are mixed with 110 g of titanium dioxide and 70 g of calcium carbonate, predispersed in part of the same resin.

3 g of trivalent cobalt hexaminonitrate, 10 g of 1-phenyl-(4′-dimethylamino)-2-hydroxy-2-methylpropanone and 10 g of 2,4,6-trimethylbenzoyldiphenylphosphine oxide dissolved in isopropanol are then added under strong stirring.

The mixture is stirred until a complete and homogeneous dispersion is formed, and the viscosity is adjusted to 30-35 sec. (Ford 4 cup) by adding water if necessary.

After brush application in a quantity of 130 g/$m_2$ the coating is subjected to the following drying cycle:
- 10 minutes at 50° C with hot air circulation;
- 4 minutes of U.V.- visible irradiation with low pressure lamps;
- 20 seconds of I.R. irradiation;
- 15 seconds of final U.V. irradiation with high-power lamps.

A film is obtained as in Example 21.

EXAMPLE 23

A black topcoat product, of polyester base in aqueous dispersion, applied by spray.

1000 g of Waloran 6002 unsaturated polyester resin in the form of a 60% dispersion in water are mixed with 8 g of carbon black predispersed in part of the same resin.

3 g of trivalent cobalt hexaminonitrate, 1 g of

cerium (IV) ammonium nitrate, 10 g of (4'-dimethylamino)-2,2-dimethyl-2-morpholinoacetophenone and 7 g of 2,4,6-trimethylbenzoyldiphenylphosphine oxide dissolved in methanol are then added.

The mixture is stirred until a complete and homogeneous dispersion is formed, and the viscosity is adjusted to 20-25 sec. (Ford 4 cup) by adding water if necessary.

After spray application in a quantity of about 160 g/$m_2$ the coating is subjected to the following drying cycle:

- 10 minutes at 50° C with hot air circulation;
- 3 minutes of U.V.- visible irradiation with low pressure lamps;
- 15 seconds of I.R. irradiation;
- 15 seconds of final U.V. irradiation with high-power lamps.

The polymer film obtained is properly cross-linked, hard and adhering to the support.

EXAMPLE 24

A black topcoat product, of polyester base in aqueous dispersion, applied by brush.

600 g of Roskydal 850 W unsaturated polyester resin in the form of a 50% dispersion in water and 10 g of carbon black predispersed in part of the same resin are mixed with 390 g of Waloran 2101 unsaturated polyester resin in the form of a 50% dispersion in water.

2 g of europium trichloride, 1 g of cobalt triacetate, and 15 g of 2,4,6-trimethylbenzoyldiphenylphosphine oxide dissolved in ethanol are then added.

The mixture is stirred until a complete and homogeneous dispersion is formed, and the viscosity is adjusted to 30-35 sec. (Ford 4 cup) by adding water if necessary.

After brush application in a quantity of about 130 g/$m_2$ the coating is subjected to the following drying cycle:

- 10 minutes at 50° C with' hot air circulation;
- 3 minutes of U.V.- visible irradiation with low pressure lamps;
- 20 seconds of I.R. irradiation;
- 15 seconds of final U.V. irradiation with high-power lamps.

The polymer film obtained is properly cross-linked and concealing.

EXAMPLE 25

A black primer product, of polyester base in aqueous dispersion, applied by spray.

850 g of Waloran 6002 unsaturated polyester resin in the form of a 60% dispersion in water are mixed with 6 g of carbon black and 140 g of kaolin predispersed in part of the same resin.

3 g of cobalt triacetate, 1 g of europium chloride (III), 10 g of 2,4,6-trimethylbenzoyldiphenylphosphine oxide and 15 g of phenyl-2-hydroxy-2-methylpropanone dissolved in ethanol are then added under strong stirring.

The mixture is stirred until a complete and homogeneous dispersion is formed, and the viscosity is adjusted to 20-25 sec. (Ford 4 cup) by adding water.

After spray application in a quantity of about 150 g/$m_2$ the coating is subjected to the following drying cycle:

- 10 minutes at 50° C with hot air circulation;
- 3 minutes of U.V.- visible irradiation with low pressure lamps;
- 15 seconds of I.R. irradiation;
- 15 seconds of final U.V. irradiation with high-power lamps.

A film is obtained which is properly polymerized, adheres to the support and can be easily sandpapered.

EXAMPLE 26

A black primer product, of mixed polyester-acrylic base, applied by brush.

440 g of Ebecryl polyester acrylate prepolymer, 10 g of carbon black and 150 g of talc predispersed in part of the said prepolymer are mixed with 200 g of Roskydal 502 unsaturated polyester resin and 200 g of N-vinylpyrrolidone monomer.

3 g of cobalt triacetate, 1 g of zinc acetylacetonate and 2 g of europium acetylacetonate dissolved in tetrahydrofuran are then added.

The mixture is stirred until a complete and homogeneous dispersion is formed, and the viscosity is adjusted to 30-35 sec. (Ford 4 cup) by adding N-vinylpyrrolidone.

After brush application in a quantity of about 110 g/$m_2$ the coating is subjected to the following drying cycle:

- 2 minutes at 40-45° C with hot air circulation;
- 3 minutes of U.V.- visible irradiation with low pressure lamps;
- 25 seconds of I.R. irradiation;
- 15 seconds of U.V. irradiation with high-power lamps of 80-120 W/cm.

A film is obtained as in Example 16.

EXAMPLE 27

A black primer product, of polyester base, applied by brush.

600 g of Roskydal 502 unsaturated polyester resin, 10 g of carbon black and 140 g of talc predispersed in part of the same resin are mixed with 150 g of diethyleneglycoldiacrylate and 100 g of N-vinylpyrrolidone monomer.

3 g of cobalt hexaminonitrate, 1 g of zinc diacrylate, 15 g of 2,4,6-trimethylbenzoyldiphenylphosphine oxide and 10 g of 1,2-diphenyl-2,2-dimethoxyethanone dissolved in isopropanol are then added.

The mixture is stirred until a complete and homogeneous dispersion is formed, and the viscosity is adjusted to 30-35 sec. (Ford 4 cup) by adding N-vinylpyrrolidone if necessary.

After brush application in a quantity of about 110 g/$m_2$ the coating is subjected to the following drying cycle:

- 2 minutes at 40-45 °C with hot air circulation;
- 3 minutes of U.V.- visible irradiation with low pressure lamps;
- 20 seconds of I.R. irradiation;
- 15 seconds of final U.V. irradiation with high-power lamps.

A film is obtained as in Example 16.

EXAMPLE 28

A red primer product, of acrylic base, applied by brush.

500 g of Ebecryl 1810 polyester acrylic prepolymer, 150 g of RO 3750 BASF red pigment and 150 g of kaolin predispersed in the same prepolymer, are mixed with 100 g of N-vinylpyrrolidone and 100 g of 1,6-hexanedioldiacrylate.

2 g of tripropoxyvanadate, 1 g of zirconium propylate, 10 g of 2,4,6-trimethylbenzoyldiphenylphosphine oxide and 15 g of phenyl-2-hydroxy-2-methylpropanone dissolved in tetrahydrofuran are then added.

The mixture is stirred until a complete and homogeneous dispersion is formed, and the viscosity is adjusted to 30-35 sec. (Ford 4 cup) by adding 1,6-hexanedioldiacrylate if necessary.

After brush application in a quantity of 120 g/$m_2$ the coating is subjected to the following drying cycle:

- 2 minutes at 40-45 °C with hot air circulation;
- 3 minutes of U.V.- visible irradiation with low pressure lamps;
- 20 seconds of I.R. irradiation;
- 15 seconds of final U.V. irradiation with high-power lamps.

A properly cross-linked film is obtained which adheres to the support and can be easily sandpapered.

EXAMPLE 29

A blue topcoat product, of polyester-acrylic base, applied by spray.

300 g of Roskydal 500A unsaturated polyester resin and 150 g of BLU 2 GLSP SANDOZ blue pigment predispersed in the same resin, are mixed with 300 g of Ebecryl 270 urethaneacrylic prepolymer and 250 g of diethyleneglycoldiacrylate.

3 g of trivalent cobalt octanoate complexed with acetylacetone, 1 g of zinc diacrylate, 15 g of 1,2-diphenyl-2,2-dimethoxyethanone and 5 g of 2,4-diisopropylthioxanthone dissolved in a mixture of isopropanol and tetrahydrofuran are then added.

The mixture is stirred until a complete and homogeneous dispersion is formed, and the viscosity is adjusted to 20-25 sec. (Ford 4 cup) by adding ethylacetate.

After spray application in a quantity of about 140 g/$m_2$ the coating is subjected to the following drying cycle:

- 3 minutes at ambient temperature with hot air circulation;
- 3 minutes of U.V.- visible irradiation with low pressure lamps;
- 2 minutes at 40-45 °C with hot air circulation;
- 20 seconds of I.R. irradiation;
- 15 seconds of final U.V. irradiation with high-power lamps.

A dense, glossy film is obtained.

EXAMPLE 30

A green primer and/or topcoat product, of acrylic base, applied by spray.

600 g of Ebecryl 1640 epoxyacrylate prepolymer and 200 g of VERDE 3 GLSL SANDOZ green pigment predispersed in part of the same prepolymer, are mixed with 200 g of diethyleneglycoldiacrylate.

2 g of trivalent cobalt octanoate complexed

with acetylacetone, 1 g of europium acetylacetonate, 5 g of chlorothioxanthone and 10 g of 2,4,6-timethylbenzoyldiphenylphosphine oxide dissolved in isopropanol-tetrahydrofuran are then added.

The mixture is stirred until a complete and homogeneous dispersion is formed, and the viscosity is adjusted to 20-25 sec. (Ford 4 cup) by adding ethylacetate.

After spray application in a quantity of about 140 g/$m_2$ the coating is subjected to the following drying cycle:

- 10 minutes at ambient temperature with hot air circulation;
- 3 minutes of U.V.- visible irradiation with low pressure lamps;
- 2 minutes at 40-45 °C with hot air circulation;
- 20 seconds of I.R. irradiation;
- 15 seconds of final U.V. irradiation with high-power lamps.

A hard film is obtained which properly adheres to the support.

EXAMPLE 31

A transparent primer and/or topcoat product, of acrylic base, applied by roller.

800 g of Ebecryl 210 urethaneacrylic prepolymer are mixed with 200 g of N-vinylpyrrolidone monomer.

2 g of isopropoxyvanadate, 2 g of zirconium octanoate and 0.5 g of zinc diacrylate dissolved in tetrahydrofuran are then added.

The mixture is stirred until a complete and homogeneous dispersion is formed, after which it is applied by roller in a quantity of about 50 g/$m^2$ and irradiated with 4 high-power (80-120 W/cm) U.V.-visible lamps at a rate of 6 m/minute, corresponding to an irradiation time of about 20 seconds.

In this manner a hard polymer film is obtained which properly adheres to the support.

EXAMPLE 32

A transparent primer product, of mixed polyester-acrylic base, applied by brush.

450 g of Ebecryl 810 polyester acrylate prepolymer are mixed with 350 g of Roskydal 500A unsaturated polyester resin and 200 g of tripropyleneglycolacrylate.

2 g of triethoxyvanadate, 2 g of zirconium butylate, 1 g of zinc diacrylate and 5 g of 1,2-diphenyl-2,2-dimethoxyethanone dissolved in anhydrous isopropanol are then added.

The mixture is stirred until a complete and homogeneous dispersion is formed, and the viscosity is adjusted to 30-35 sec. (Ford 4 cup, ASTM D-1200-82 method) by adding 1,6-hexanedioldiacrylate if necessary.

After brush application in a quantity of about 140 g/$m_2$ the coating is subjected to the following drying cycle:

- 2 minutes at 40-45 °C with hot air circulation;
- 3 minutes of U.V.- visible irradiation with low pressure lamps;
- 10 seconds of I.R. irradiation;
- 10 seconds of final U.V. irradiation with high-power lamps.

In this manner a large-thickness properly polymerized film is obtained which adheres to the support and can be easily sandpapered.

EXAMPLE 33

A transparent primer and/or topcoat product, of mixed polyesteracrylic base, applied by spray.

350 g of Roskydal 502 unsaturated polyester resin are mixed with 350 g of Ebecryl 270 urethaneacrylic prepolymer and 300 g of 1,6-hexanedioldiacrylate.

3 g of cobalt triacetate complexed with acetylacetone, 2 g of zinc diacrylate and 5 g of 2,4,6-trimethylbenzoyldiphenylphosphine oxide dissolved in tetrahydrofuran are then added.

The mixture is stirred until a complete and homogeneous dispersion is formed, and the viscosity is adjusted to 20-25 sec. (Ford 4 cup) by adding ethylacetate if necessary.

After spray application in a quantity of about 180 g/$m_2$ the coating is subjected to the following drying cycle:

- 5 minutes at ambient temperature with air circulation;
- 3 minutes of U.V.- visible irradiation with low pressure lamps;
- 3 minutes at 40-45 °C with hot air circulation;
- 15 seconds of final U.V. irradiation with high-power lamps.

In this manner a large-thickness film is obtained which is properly polymerized and adheres to the support.

## Claims

1. Coating products suitable for photochemical polymerization by irradiation with emission in the

near U.V and visible, with possible additional irradiation with emission in the infrared and/or ultraviolet. consisting of homogeneous dispersions of:

a) resins with ethylenically unsaturated groups and/or prepolymers with the same type of unsaturations, possibly in the presence of monomers of acrylic, vinyl or allyl type;

b) one or more photocatalysts chosen from inorganic acid salts, organic acid salts, alkoxy, phenoxy, thioderivatives and azoderivatives of metals of group IV A and of groups I B to VII B and VIII of the periodic table.

2. Coating products as claimed in claim 1, consisting of homogeneous dispersions of:

a) resins with ethylenically unsaturated groups and/or prepolymers with the same type of unsaturations, possibly in the presence of monomers of acrylic, vinyl or allyl type;

b) one or more photocatalysts chosen from inorganic acid salts, organic acid salts, alkoxy, phenoxy, thioderivatives and azoderivatives of metals of group IV A and of groups I B to VII B and VIII of the periodic table;

c) one or more photoinitiators, chosen from derivatives of thioxanthone, acetophenone, benzophenone, benzoin, ketoxime and acylphosphine oxide, characterised by the presence of the group

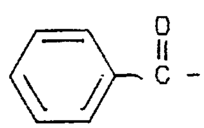

which can be substituted.

3. Coating products with high pigmentation levels, suitable for photochemical polymerization by irradiation with emission in the near U.V and visible, with possible additional irradiation with emission in the infrared and/or ultraviolet, consisting of homogeneous dispersions of:

a) resins with ethylenically unsaturated groups and/or prepolymers with the same type of unsaturations, possibly in the presence of monomers of acrylic, vinyl or allyl type;

b) pigments and/or fillers;

c) one or more photocatalysts chosen from inorganic acid salts, organic acid salts, alkoxy, phenoxy, thioderivatives and azoderivatives of metals of group IV A and of groups I B to VII B and VIII of the periodic table.

4. Coating products as claimed in claim 3, consisting of homogeneous dispersions of:

a) resins with ethylenically unsaturated groups and/or prepolymers with the same type of unsaturations, possibly in the presence of monomers of acrylic, vinyl or allyl type;

b) pigments and/or fillers;

c) one or more photocatalysts chosen from inorganic acid salts, organic acid salts, alkoxy, phenoxy, thioderivatives and azoderivatives of metals of group IV A and of groups I B to VII B and VIII of the periodic table;

d) one or more photoinitiators, chosen from derivatives of thioxanthone, acetophenone, benzophenone, benzoin, ketoxime and acylphosphine oxide, characterised by the presence of the group

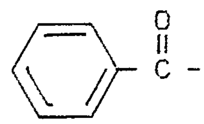

which can be substituted.

5. Coating products as claimed in claims 1 to 4, characterised in that the unsaturated resin is a styrenated unsaturated resin.

6. Coating products as claimed in claims 1 to 4, characterised in that the prepolymer is chosen from epoxyacrylic, urethaneacrylic and polyester acrylic prepolymers.

7. Coating products as claimed in claims 1 to 4, characterised in that the unsaturated monomer is chosen from ethylacrylate, styrene, 1,6-hexanedioldiacrylate, trimethylolpropanetriacrylate, diethyleneglycoldiacrylate, tripropylene glycoldiacrylate, bisphenoldiacrylate, vinylcarbazole, trimethylpropanediallylether and diethyleneglycolbisallylethercarbonate.

8. Coating products as claimed in claims 1 to 4, characterised in that the photocatalysts are soluble in the polymerizable system.

9. Coating products as claimed in claims 1 to 4, characterised in that the metal inorganic acid salts forming the photocatalysts are chosen from sulphates, halides and nitrates.

10. Coating products as claimed in claims 1 to 4, characterised in that the metal inorganic acid salts forming the photocatalysts are chosen from acetates, propionates, oxalates, acrylates and octanoates.

11. Coating products as claimed in claims 1 to 4, characterised in that the metal alkoxy compounds forming the photocatalyst are chosen from ethoxy, propoxy, isopropoxy, butoxy, tert-butoxy, pentoxy and phenoxy.

12. Coating products as claimed in claims 2 and 4, characterised in that the photoinitiators are chosen from thioxanthone derivatives of formula:

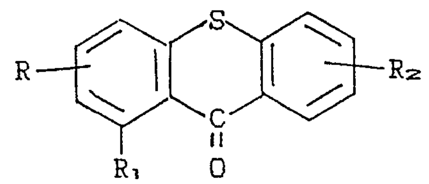

where R, $R_1$ and $R_2$ can be hydrogen, halogens, or alkyl, alkenyl or alkynyl groups.

13. Coating products as claimed in claims 2 and 4, characterised in that the photoinitiators are chosen from acetophenone derivatives of formula:

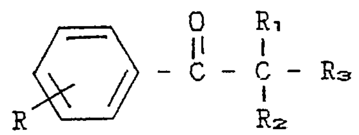

where R, $R_1$, $R_2$ and $R_3$ can be hydrogen, halogens, or alkyl, hydroxy, alkoxy, amino or heterocyclic groups.

14. Coating products as claimed in claims 2 and 4, characterised in that the photoinitiators are chosen from benzophenone derivatives of formula:

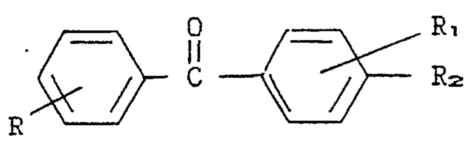

where R, $R_1$ and $R_2$ can be hydrogen, or alkyl, alkenyl, alkynyl or alkoxy groups.

15. Coating products as claimed in claims 2 and 4, characterised in that the photoinitiators are chosen from benzoin derivatives of formula:

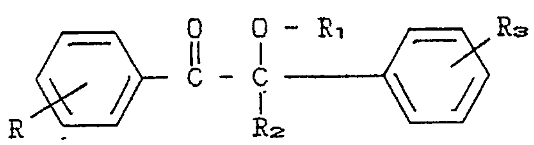

where $R_2$ can be hydrogen or $OR_4$, and R, $R_1$, $R_3$ and $R_4$ can be hydrogen, or alkyl, alkenyl, alkynyl or aryl groups.

16. Coating products as claimed in claims 2 and 4, characterised in that the photoinitiators are chosen from ketoxime derivatives of formula:

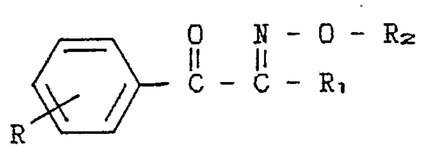

where R, $R_1$ and $R_2$ can be hydrogen, halogens, or alkyl or sulphonyl groups.

17. Coating products as claimed in claims 2 and 4, characterised in that the photoinitiators are chosen from acylphosphine oxide derivatives of formula:

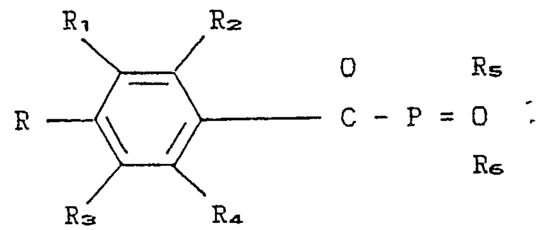

where R, $R_1$, $R_2$, $R_3$, $R_4$, $R_5$ and $R_6$ can be hydrogen, halogens, or alkyl, acrylic, cyclohexyl, alkoxy or heterocyclic groups containing sulphur, nitrogen or oxygen atoms.

18. Coating products as claimed in claims 1 to 4, characterised in that the photocatalysts are used in quantities of between 0.01% and 1% w/w of the unsaturated compounds to be polymerized.

19. Coating products as claimed in claims 2 and 4, characterised in that the photoinitiators are used in quantities of between 0.5% and 5% w/w of the unsaturated compounds to be polymerized.

20. Coating products as claimed in claims 2 and 4, characterised in that the photocatalyst:photoinitiator weight ratio is between 0.05:1 and 0.2:1.

21. A process for preparing the coating products claimed in claims 3 and 4, characterised in that said products are obtained by adding the photocatalyst and the possible photoinitiator to the system consisting of the resin and/or prepolymer and/or monomer to be polymerized while stirring, then possibly adding an additional quantity of monomer and/or solvent and stirring until a homogeneous and complete dispersion is obtained.

22. A process for preparing the coating products claimed in claims 3 and 4, characterised in that said products are obtained by predispersing the pigments and/or fillers in part of the resin and/or prepolymer and/or monomer to be polymerized, then mixing this predispersion with the remainder of said resin and/or prepolymer and/or monomer, adding the photocatalyst and possibly the photoinitiator to the system while stirring, possibly adding an additional quantity of monomer and/or solvent and stirring until a homogeneous and complete dispersion is obtained.

23. A process as claimed in claims 21 and 22, characterised in that the photocatalyst is solubilized in the monomer to be polymerized or in a solvent to be added to the system.

24. A process for polymerizing the coating

products claimed in claims 1 to 20, which is effected photochemically by irradiation with emission in the near ultraviolet and in the visible.

25. A process as claimed in claim 24, characterised in that the irradiation with emission in the near ultraviolet and in the visible is followed by a cycle of irradiation in the infrared and/or in the ultraviolet.

European Patent Office

# EUROPEAN SEARCH REPORT

Application Number

EP 90 11 1328

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 141 131 (DAINIPPON INK)<br>* Claims 1,7; page 2, line 41 - page 3, line 6; page 3, lines 34-54 *<br>--- | 1-25 | C 09 D 201/00<br>C 08 F 299/02<br>C 08 F 299/04<br>C 08 F 299/06<br>C 08 F 2/50 |
| X | DATABASE WPIL (DERWENT), accession no. 86-199766, Derwent Publications Ltd, London, GB; & JP-A-61 130 382 (NIPPON SODA K.K.) 18-06-1986<br>* Abstract *<br>--- | 1-25 | |
| X | CHEMICAL ABSTRACTS, vol. 110, no. 22, 29th May 1989, page 101, abstract no. 194806a, Columbus, Ohio, US; & JP-A-63 86 772 (TOYO INK MFG. CO., LTD) 18-04-1988<br>* Abstract *<br>----- | 1-25 | |
| | | | TECHNICAL FIELDS SEARCHED (Int. Cl.5) |
| | | | C 08 F |

The present search report has been drawn up for all claims

| Place of search | Date of completion of the search | Examiner |
|---|---|---|
| THE HAGUE | 30-08-1990 | MEULEMANS R.A.M.G.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)